# EUROPÄISCHE PATENTSCHRIFT

(11) **EP 0 270 891 B1**
(45) Veröffentlichungstag und Bekanntmachung des Hinweises auf die Patenterteilung: **06.04.1994**
(21) Anmeldenummer: 87117116.1
(22) Anmeldetag: 20.11.1987
(51) Int. Cl.: C09J 133/06, C08L 33/06

(54) **Alkalischer wässriger Alleskleber auf Poly(meth-)acrylatbasis**
Alcaline aqueous universal adhesive based on poly(meth-)acrylates
Colle universelle alcaline aqueuse à base de poly(méth-)acrylates

(30) Priorität: 12.12.1986 DE 3642498
(43) Veröffentlichungstag der Anmeldung: 15.06.1988
(73) Patentinhaber: Pelikan GmbH, 30177 Hannover (DE)
(72) Erfinder: Borchers, Jürgen, Dr., D-3014 Laatzen 1 (DE); Bubolz, Petra, D-3008 Garbsen 1 (DE)
(74) Vertreter: Volker, Peter, Dr.

(56) Entgegenhaltungen:
- PATENT ABSTRACTS OF JAPAN, Band 5, Nr. 160 (C-75)[832], 15. Oktober 1981; & JP-A-56 090 872

## Beschreibung

Die Erfindung betrifft einer alkalischen wäßrigen Alleskleber auf Poly(meth-)acrylatbasis und mit einem Gehalt an Polyvinylpyrrolidon.

Aus der DE-OS 34 07 279 ist eine wäßrige Klebstoffmischung auf Poly(meth-)acrylatbasis bekannt, die zur Herstellung einer selbstklebenden Folie dient, mit der es möglich ist, empfindliche Oberflächen (lackierte Kunststoffprofile) beim Transport, bei der Lagerung und bei der Konfektionierung wirksam zu schützen. Es handelt sich um eine getrübte wäßrige Dispersion. Sie erfüllt nicht die Anforderungen, die beispielsweise an einen sogenannten "Alleskleber" gerichtet ist.

Alleskleber sind definitionsgemäß Adhäsionsklebstoffe, die zwar nicht alles, jedoch viele Substrate mit unterschiedlichem Ergebnis verkleben können. Daher könnte es zweckmäßig erscheinen, sie besser als Vielzweckkleber zu bezeichnen. Der Begriff "Alleskleber" hat sich jedoch weitgehend durchgesetzt und soll unter Berücksichtigung der nachfolgenden Definition herangezogen werden. Alleskleber enthalten als klebende Stoffe hochmolekulare Verbindungen, die an vielen Oberflächen haften. Bevorzugt wurden hierfür bisher Nitrozellulose und Polyvinylacetat. Sie sind in Lösungsmittelgemischen enthalten, die beispielsweise aus Estern und Ketonen bestehen und manchmal auch gewisse Alkoholanteile enthalten. Die Zusammensetzung des Lösungsmittelanteils wird durch die verwendeten Polymeren, die gewünschte Fließfähigkeit des Klebstoffs und die geforderte Abbindegeschwindigkeit festgelegt. Auf bestimmte Kunststoffe können derartige Lösungsmittel eine anlösende Wirkung haben.

Mit Allesklebern läßt sich eine Vielzahl von Substraten, so z.B. aus Holz, Papier, Metall und Leder, fest miteinander verkleben. Zu den bekannten Allesklebern zählen beispielsweise der Uhu-, der Pritt- und der Stabilit-dur-Alleskleber.

Die bisher bekannten Alleskleber beruhen, wie vorstehend gezeigt, überwiegend auf der Basis organischer Lösungsmittel. Dies ist im Hinblick auf die angehobenen Bestimmungen des Umweltschutzes und der Arbeitsplatzbedingungen nachteilig, da diese schädlichen organischen Lösungsmittelanteile beim Klebevorgang verdunsten müssen. Es gibt zwar bereits wäßrige Alleskleber, die diesen Mangel ausschließen. Sie sind jedoch unter Feuchtigkeitseinwirkung redispergierbar, so daß eine gewünschte Dauerverbindung von verklebten Substraten wieder behoben wird. Auch die Zug- und Scherfestigkeiten der damit erhaltenen Klebebindungen stellen nicht zufrieden. Häufig wird es von dem Kunden auch gewünscht, daß der Alleskleber Transparenz zeigt. Die Mehrzahl der bisher im Handel erhältlichen wäßrigen Alleskleber erfüllen diese Anforderung nicht.

Die Literaturstelle Patent Adstracts of Japan Bd. 5, Nr. 160 (- 75) [832], 15.10.1981 beschreibt einen wäßrigen Kleber auf Poly(meth-)acrylatbasis, der des weiteren Polyvinylpyrrolidon, ein Alkanolamin, einen Alkohol sowie Polyethylenglykol enthält.

Der Erfindung lag die Aufgabe zugrunde, einen wäßrigen Alleskleber vorzuschlagen, der keine organischen Lösungsmittel zum Lösen der klebenden Bestandteile benötigt und zu verbesserten Klebewerten, insbesondere zu einer dauerhaften Verklebung der Substrate führt. Darüber hinaus soll er auch transparent einstellbar sein.

Erfindungsgemäß wird diese Aufgabe durch einen alkalischen wäßrigen Alleskleber der eingangs beschriebenen Art gelöst, der dadurch gekennzeichnet ist, daß er ein freie Carboxylgruppen aufweisendes Poly(meth-)acrylat eines Veresterungsgrades von 0,65 bis 0,85 enthält, wobei das Gewichtsverhältnis von Poly(meth-)acrylat zu Polyvinylpyrrolidon 10 : 1 bis 1 : 5 beträgt und er durch Ammoniak in einer solchen Menge alkalisch eingestellt ist, daS das Poly(meth-)acrylat und Polyvinylpyrrolidon gelöst vorliegen.

Im Rahmen der Erfindung kann demzufolge der Alleskleber auf ein Poly(meth-)acrylat und/oder Polyacrylat zurückgehen. Die Polyacrylatbasis wird bevorzugt. In beiden Fällen ist es wichtig, daß das Polymer freie Carboxylgruppen aufweist, um damit das wünschenswerte Lösungsvermögen zu erhalten. Der Veresterungsgrad liegt zwischen 0,65 und 0,85. Wird der obere Wert von 0,85 überschritten, dann ist das Lösungsvermögen soweit eingeschränkt, daß einerseits die vorzugsweise angestrebte Transparenz nicht mehr erreicht wird und andererseits auch die Klebeeffekte nicht mehr optimal sind. Letzteres gilt auch für die Unterschreitung des Wertes von 0,65. Es ist anzunehmen, daß der HLB-Wert bei der Anwendung des erfindungsgemäßen Allesklebers eine Rolle spielt und dieser durch den erörterten Veresterungsgrad beeinflußt wird.

Die für die Zwecke der Erfindung geeigneten Poly(meth-)acrylate werden in der Praxis durch übliche Polymerisationsreaktionen aus (Meth-)acrylatestern und (Meth-)acrylsäure in dem gewünschten Verhältnis zur Einstellung des notwendigen Veresterungsgrades umgesetzt. Verfahren dieser Art sind dem Fachmann geläufig, so daß weitergehende Ausführungen nicht nötig sind.

Bei der Durchführung der erwähnten Polymerisation kann man von (Meth-)acrylatestern ausgehen, deren Veresterung auf niedere Alkyl- und/oder Cycloalkylalkohole zurückgeht. Dabei wird es bevorzugt, wenn die niedere Alkyl- gruppe der Alkohole die Methyl-, Äthyl-, Propyl-, Isopropyl- oder Butylgruppe und die niedere Cycloalkylgruppe der Alkohole eine Cyclohexylgruppe ist. Ganz besonders bevorzugt werden die Methyl-, Äthyl- und Isopropylgruppe. Bei der Umsetzung zum Polymeren können auch Mischungen von Estern, insbesondere des Methyl- und Äthyl- sowie Isopropylesters, eingesetzt werden.

Folgende Handelsprodukte haben sich im Rahmen der Erfindung als besonders vorteilhaft erwiesen, wobei Analysen, die in Klammern angegebenen Molverhältnisse der Ausgangsmaterialien lieferten: Ucramol 4020 (Acrylsäure/Acrylsäuremethylester/Acrylsäureäthylester = 14/10/21; Molekulargewicht: etwa 8.800), Plex 4980D (Acrylsäure/Acrylsäuremethylester/Acrylsäureisobotylester = 4/9/14; Molekulargewicht: etwa 9.800) und Setalin AD 620 AQ 45 (Acrylsäure/Acrylsäuremethylester/Acrylsäureäthylester = 9/9/21; Molekulargewicht: etwa 8.000).

Grundsätzlich lassen sich zur Erzielung der angestrebten Effekte besonders vorteilhaft niedermolekulares Poly(meth-)acrylat sowie niedermolekulares Polyvinylpyrrolidon einsetzen. Durch die Wahl eines niedermolekularen Ausgangsmaterials werden die Fließeigenschaften günstig beeinflußt. Darüber hinaus lassen sie sich besser lösen, so daß die wünschenswerte Transparenz besser einstellbar ist. Bevorzugt wird bei dem Poly(meth-)acrylat ein Molekulargewichtsbereich von 2.000 bis 30.000, insbesondere 4.000 bis 12.000 gewählt. Beim Polyvinylpyrrolidon beträgt der bevorzugte Molekulargewichtsbereich etwa 1.000 bis 15.000, insbesondere etwa 2.000 bis 12.000.

Um die wünschenswerten Klebeeffekte zu erzielen, spielt auch das Gewichtsverhältnis von Poly(meth-)acrylat und Polyvinylpyrrolidon eine Rolle, da vermutlich die Abbindemechanismen des Klebevorgangs auf chemische Wechselwirkungen dieser beiden Bestandteile zurückgeht. Es hat sich gezeigt, daß das Gewichtsverhältnis von Poly(meth-)acrylat zu Polyvinylpyrrolidon 10 : 1 bis 1 : 5 beträgt. Bevorzugt wird der Bereich von 5 : 1 bis 1 : 1. Auch die Gesamtmenge dieser beiden Bestandteile in dem erfindungsgemäßen Kleber muß bedacht werden. Versuche haben gezeigt, daß diese Gesamtmenge vorzugsweise zwischen etwa 5 und 40 Gew.-% liegen sollte.

Wenn es wünschenswert und zweckmäßig ist, den erfindungsgemäßen Alleskleber transparent einzustellen, dann bieten sich hierzu mehrere Möglichkeiten an. Das Polyvinylpyrrolidon als solches ist gut wasserlöslich. Anders verhält es sich mit dem Poly(meth-)acrylat, das zweckmäßigerweise in einem wäßrigen alkalischen Medium in Lösung gebracht wird. Die beiden wäßrigen Ausgangslösungen können dann miteinander gemischt werden und liefern eine klare wäßrige Kleberlösung. Bei dem Polyvinylpyrrolidon kann die vorausgegangene Auflösung in einem wäßrigen Medium auch ausgelassen und dieses in fester Substanz direkt zu der wäßrigen Polyacrylatlösung gegeben werden. Grundsätzlich könnte man selbstverständlich auch beide Festsubstanzen in ein alkalisches Medium einrühren. Bevorzugt wird es allerdings, wenn von einer handelsüblichen wäßrigen Poly(meth-)acrylat-Dispersion ausgegangen, diese mit Ammoniak alkalisch eingestellt und hierzu das Polyvinylpyrrolidon, sei es in wäßrigem Medium oder als solches, hinzugegeben wird.

Die Wahl von Ammoniak für den aufesprochenen Zwecke bietet vielfältige Vorteile.

So werden besonders feste Klebeverbindungen erzielt. Darüber hinaus verdampft Ammoniak beim Abbinden des Klebstoffs und führt zu irreversiblen Klebebindungen bzw. schließt die Redispergierbarkeit weitestgehend aus. Diese Vorteile gelten zwar auch für verschiedene niedrig-siedende Amine, die jedoch im Hinblick auf den wünschenswerten Ausschluß organischer umweltschädlicher und gesundheitsgefährdender Verbindungen außer Betracht bleiben.

Neben den oben erörterten Bestandteilen des erfindungsgemäßen Allesklebers kann dieser auch weitere Additive enthalten, um ihm bei speziellen Anwendungsfällen verbesserte Eigenschaften zu verleihen. Diese Zusätze berühren allerdings das lesen der Erfindung nicht. So kann es im Falle des Verklebens von flexiblen Substraten empfehlenswert sein, dem Alleskleber mehrwertige Alkohole, wie insbesondere Glyzerin und Glykol, beizumischen, um die Flexibilität des Filmes zu erhöhen und eine Wellenbildung, wie beispielsweise beim Verkleben von Papier, auszuschließen bzw. auf ein vernachlässigbares Maß zurückzuführen.

Bei der Einstellung der Alkalität des erfindungsgemäßen Klebers unterliegt man ebenfalls keinen wesentlichen Einschränkungen. Es sollte lediglich angestrebt werden, daß zumindest der überwiegende Anteil des Poly(meth-)acrylats in Lösung geht. Das bedeutet, daß die Carbonsäuregruppen in die Carboxylatgruppen überführt werden.

Die Carboxylatgzuppen sind der eigentliche Lösungsvermittler. Die Alkalität sollte allerdings auch nicht zu stark angehoben werden, da hierdurch einerseits die Löslichkeit des Polyvinylpyrrolidons beeinträchtigt und, wie es sich gezeigt hat, die Viskosität unerwünscht angehoben werden kann. Wird ein besonders gutes Fließverhalten des Klebers angestrebt, sollte der pH-Wert möglichst nicht über etwa 10 liegen. Im Hinblick auf die Forderung, möglichst "alles" zu kleben, wird es besonders vorteilhaft sein, den pH-Wert auf etwa 8,5 bis 9 einzustellen.

Die mit dem erfindungsgemäßen Kleber verbundenen Vorteile sind vielfältiger Art. Zunächst genügt er in hohem Maße den an einen Alleskleber gerichteten Anforderungen. So klebt er besonders gut Papiere, Fotos, fast alle saugenden Substrate, Metalle und auch Glas. Darüber hinaus klebt er auch poröses Polystyrol der Handelsbezeichnung "Styropor", was für die bisher bevorzugten handelsüblichen lösungsmittelhaltigen Alleskleber nicht gilt.

Er zeigt eine verhältnismäßig lange Klebezeit, was für das Verkleben von großen Flächen von Vorteil ist. Mit dem erfindungsgemäßen Alleskleber werden vorzügliche Zugfestigkeitswerte bei der Verklebung erzielt, so bei Holz bis zu etwa 700 N/cm² und bei Glas bis zu etwa 110 N/cm². Ferner läßt er sich, wenn es gewünscht wird, ohne weiteres transparent einstellen, was durch die mehr oder weniger weite Anhebung des pH-Wertes über den Neutralwert und/oder durch Senkung des Anteils an Poly(meth-)acrylat möglich ist.

Die Erfindung soll nachfolgend anhand verschiedener Beispiele noch näher erläutert werden.

### Beispiel 1:

45,2 Gewichtsteile Wasser wurden mit 1,8 Gewichtsteilen 20%igen wäßrigem Ammoniak versetzt. Hierzu wurden 5 Gewichtsteile einer 40%igen wäßrigen Polyacrylat-Dispersion (Handelsname Uramul 4020 von der Firma Scado GmbH) gegeben. Es wurde bei Raumtemperatur so lange gerührt, bis sich eine klare Lösung einstellte.

Hierzu wurden 10,5 Gewichtsteile eines handelsüblichen Polyvinylpyrrolidons (Handelsbezeichnung Luviskol K 80-Pulver der Fa. BASF) unter Rühren gegeben. Nach Auflösen dieses Pulvers wurde eine klare Lösung erhalten. Diese wurde zum Verkleben von Holz- und Glassubstraten herangezogen. Dabei wurden nach folgendem Vorgehen die später noch angegebenen Zug- bzw. Schwerfestigkeitswerte erzielt.

Bei dem Verkleben von Holz wurde auf die Zugfestigkeit abgestellt. Hierbei wurden zwei Holzleisten der Dimension 2 x 10 cm in Form eines "T" aufeinandergeklebt. Beide Leisten wurden mit dem Klebstoff bestrichen. Es wurde etwa 10 Minuten gewartet. Darauf wurden die beiden Holzleisten aufeinandergedrückt. Die Klebestelle wurde eine Stunde lang mit einem kg belastet. Nach 16 Stunden Durchtrocknen wurde eine Zugfestigkeit von 389 N/cm² erzielt.

Die Scherfestigkeitswerte wurden beim Verkleben von Glas ermittelt. Hierbei wurden zwei Glasleisten der Dimension von 2 x 10 cm in Form eines "T" aneinandergeklebt.

Die "2-cm"-Kante wurde mit dem Klebstoff bestrichen (dick) und gegen die "10 cm"-Kante geschoben, so daß sich eine Wulst bildete. Nach einer 16stündigen Trocknungszelt wurde eine Scherfestigkeit von 113 N/cm² ermittelt.

### Beispiel 2:

Es wurden 37,1 Gewichtsteile Wasser, 2,9 Gewichtsteile 20%iges wäßriges Ammoniak, 14,3 Gewichtsteile 20%ige wäßrige Polyvinylpyrrolidon-Lösung (Luvistol KPO von der Fa. BASF) sowie 45,7 Gewichtsteile einer 45%igen wäßrigen Polyacrylatlösung (Setalin AD 620 AQ 45 der Fa. Synthese v.B.) unter Rühren gemischt. Sobald sich eine klare Lösung ergab, wurde mit diesem Alleskleber der Klebeversuch durchgeführt, der im Beispiel 1 angegeben ist. Für das Verkleben von Holz ergab sich dabei der Zugfestigkeitswert von 607 N/cm² und für das Verkleben von Glas die Scherfestigkeit von 99 N/cm².

### Beispiel 3:

Es wurden unter Rühren 9,5 Gewichtsteile Wasser, 0,5 Gewichtsteile 20%iges wäßriges Ammoniak, 80 Gewichtsteile einer 20%igen wäßrigen Polyvinylpyrrolidon-Lösung (Luviskol K 80 von der Fa. BASF) sowie 10 Gewichtsteile einer 40%igen wäßrigen Polyacrylatlösung (Plex 4980 D von der Fa. Röhm GmbH) gemischt. Sobald sich eine klare Lösung eingestellt hatte, wurden mit dieser die im Beispiel 1 beschriebenen Klebeversuche durchgeführt. Dabei ergab sich für das Verkleben von Holz eine Zugfestigkeit von 461 N/cm² und bei der von Glas eine Scherfestigkeit von 44 N/cm².

### Beispiel 4 (Vergleichsbeispiel):

Der nach dem Beispiel 2 hergestellte erfindungsgemäße Alleskleber wurde mit einem anerkannt guten Handelsprodukt auf Lösungsmittelbasis (Lösungsmittel: Gemisch aus 79 % Methylacetat, 15 % Äthanol und 6 % Methanol; klebender Bestandteil: Polyvinylacetat) verglichen. Dabei wurden beim Verkleben von verschiedenen Papiersorten sowie Holz vergleichbare Zugfestigkeitswerte unter Anwendung der im Beispiel 1 beschriebenen Methode ermittelt. Beim Verkleben von Glas und Metall wurden mit dem erfindungsgemäßen Alleskleber Zugfestigkeitswerte von 160 bzw. 190 N/cm² gegenüber Werten von 80 bzw. 40 N/cm² beim Vergleichskleber festgestellt. Darüber hinaus klebte der erfindungsgemäße Alleskleber Styropor, was für den Vergleichskleber nicht galt.

## Patentansprüche

1. Alkalischer wäßriger Alleskleber auf Poly(meth-)acrylatbasis und mit einem Gehalt an Polyvinylpyrrolidon, dadurch **gekennzeichnet,** daß er ein freie Carboxylgruppen aufweisendes Poly(meth-)acrylat eines Veresterungsgrades von 0,65 bis 0,85 enthält, wobei das Gewichtsverhältnis von Poly(meth-)acrylat zu Polyvinylpyrrolidon 10 : 1 bis 1 : 5 beträgt und er durch Ammoniak in einer solchen Menge alkalisch eingestellt ist, daß das Poly(meth-)acrylat und Polyvinylpyrrolidon gelöst vorliegen.

2. Kleber nach Anspruch 1, dadurch gekennzeichnet, daß er Polyacrylat enthält.

3. Kleber nach Anspruch 1 oder 2, dadurch gekennzeichnet, daß er ein niedermolekulares Poly(meth-)acrylat und/oder niedermolekulares Polyvinylpyrrolidon enthält.

4. Kleber nach Anspruch 3, dadurch gekennzeichnet, daß das Molekulargewicht des Polyacrylats 4000 bis 12000 beträgt.

5. Kleber nach Anspruch 2, dadurch gekennzeichnet, daß das Molekulargewicht des Polyvinylpyrrolidons 2000 bis 12000 beträgt.

6. Kleber nach mindestens einem der vorhergehenden Ansprüche, dadurch gekennzeichnet, daß das Gewichtsverhältnis von Poly(meth-)acrylat zu Polyvinylpyrrolidon 5 : 1 bis 1 : 1 und deren Gesamtgewicht 20 bis 30 Gew.-% des Klebers beträgt.

7. Kleber nach mindestens einem der vorhergehenden Ansprüche, dadurch gekennzeichnet, daß die Veresterung auf niedere Alkyl- und/oder Cycloalkylalkohole zurückgeht, wobei die niedere Alkylgruppe der Alkohole die Methyl-, Äthyl-, Propyl-, Isopropyl- oder Butylgruppe und die niedere Cycloalkylgruppe eine Cyclohexylgruppe ist.

## Claims

1. An alkaline aqueous poly(meth-)acrylate-based universal adhesive with a content of polyvinylpyrrolidone, characterised in that it contains a poly(meth-)acrylate with a degree of esterification of 0.65 to 0.85 and with free carboxyl groups, whereby the weight ratio of poly(meth-)acrylate to polyvinylpyrrolidone lies between 10:1 and 1:5 and it is rendered alkaline by the addition of a quantity of ammonia such that the poly(meth-)acrylate and polyvinylpyrrolidone are in solution.

2. An adhesive according to Claim 1, characterised in that it contains polyacrylate.

3. An adhesive according to either Claim 1 or 2, characterised in that it contains a low molecular weight poly(meth)acrylate and/or low molecular weight polyvinylpyrrolidone.

4. An adhesive according to Claim 3, characterised in that the molecular weight of the polyacrylate lies between 4,000 and 12,000.

5. An adhesive according to Claim 2, characterised in that the molecular weight of the polyvinylpyrrolidone lies between 2,000 and 12,000.

6. An adhesive according to at least one of the above claims, characterised in that the weight ratio of poly(meth)acrylate to polyvinylpyrrolidone lies between 5:1 and 1:1 and that their total weight constitutes 20 to 30 per cent by weight of the adhesive.

7. An adhesive according to any one of the above claims characterised in that the esterification is based on lower alkyl and/or cycloalkyl alcohols, whereby the lower alkyl group of the alcohol is a methyl, ethyl, propyl, isopropyl or butyl group and the lower cycloalkyl group is a cyclohexyl group.

## Revendications

1. Colle universelle alcaline aqueuse à base de poly(méth-)acrylate et avec une teneur en polyvinylpyrrolidone, caractérisée en ce qu'elle contient un poly(méth-)acrylate présentant des groupes carboxyle libres, d'un taux d'estérification de 0,65 à 0,85, la proportion pondérale du poly(méth-)acrylate à la polyvinylpyrrolidone est de 10:1 à 1:5, et on ajuste le pH en milieu alcalin par de l'ammoniac, de sorte que le poly(méth-)acrylate et la polyvinylpyrrolidone soient dissous.

2. Colle selon la revendication 1, caractérisée en ce qu'elle contient du polyacrylate.

3. Colle selon la revendication 1 ou 2, caractérisée en ce qu'elle contient un poly(méth)-acrylate de bas poids moléculaire et/ou de la polyvinylpyrrolidone de bas poids moléculaire.

4. Colle selon la revendication 3, caractérisée en ce que le poids moléculaire du polyacrylate est compris entre 4000 et 12000.

5. Colle selon la revendication 2, caractérisée en ce que le poids moléculaire de la polyvinylpyrrolidone est compris entre 2000 et 12000.

6. Colle selon au moins une des revendications précédentes, caractérisée en ce que la proportion pondérale du poly(méth-)acrylate à la polyvinylpyrrolidone est de 5:1 à 1:1 et leur poids total représente de 20 à 30 % en poids de la colle.

7. Colle selon au moins une des revendications précédentes, caractérisée en ce que l'estérification est à base d'alcanols et cycloalcanols inférieurs, les groupes alkyles inférieurs des alcools étant les groupes méthyle, éthyle, propyle, isopropyle, ou butyle et le groupe cycloalkyle inférieur est un groupe cyclohexyle.
